(19) Europäisches Patentamt
European Patent Office
Office européen des brevets

(11) Veröffentlichungsnummer: **0 298 365 B1**

(12) **EUROPÄISCHE PATENTSCHRIFT**

(45) Veröffentlichungstag der Patentschrift: **07.09.94**

(51) Int. Cl.5: **C08L 77/00**, C08L 71/12

(21) Anmeldenummer: **88110445.9**

(22) Anmeldetag: **30.06.88**

Die Akte enthält technische Angaben, die nach dem Eingang der Anmeldung eingereicht wurden und die nicht in dieser Patentschrift enthalten sind.

# (54) Thermoplastische Formmassen.

(30) Priorität: **08.07.87 DE 3722502**

(43) Veröffentlichungstag der Anmeldung:
**11.01.89 Patentblatt 89/02**

(45) Bekanntmachung des Hinweises auf die Patenterteilung:
**07.09.94 Patentblatt 94/36**

(84) Benannte Vertragsstaaten:
**BE DE FR GB NL**

(56) Entgegenhaltungen:
**EP-A- 0 225 170**
**EP-A- 0 253 123**
**DE-A- 2 310 034**
**US-A- 4 107 130**
**EP-A- 0 231 626**
**EP-A- 0 269 748**
**US-A- 4 085 163**

(73) Patentinhaber: **BASF Aktiengesellschaft**
**Carl-Bosch-Strasse 38**
**D-67063 Ludwigshafen (DE)**

(72) Erfinder: **Taubitz, Christof, Dr.**
**In der Dreispitz 15**
**D-6706 Wachenheim (DE)**
Erfinder: **Seiler, Erhard, Dr.**
**Erpolzheimer Strasse 1**
**D-6700 Ludwigshafen (DE)**
Erfinder: **Boehlke, Klaus, Dr.**
**Gerhart-Hauptmann-Strasse 53**
**D-6717 Hessheim (DE)**
Erfinder: **Bronstert, Klaus, Dr.**
**Gartenstrasse 26**
**D-6719 Carlsberg (DE)**
Erfinder: **Wagner, Daniel, Dr.**
**Prof.-Dillinger-Weg 44**
**D-6702 Bad Duerkheim (DE)**

EP 0 298 365 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue thermoplastische Formmassen, enthaltend als wesentliche Komponenten

A) 5 bis 94 Gew.% eines Polyamids

B) 5 bis 94 Gew.% eines modifizierten Polyphenylenethers hergestellt aus

$b_1$) 4,95 - 99,95 Gew.% eines Polyphenylenethers,

$b_2$) 0 - 90 Gew.% eines vinylaromatischen Polymeren,

$b_3$) 0,05 - 10 Gew.%

$b_{31}$) Fumarsäure und/oder

$b_{32}$) eines Maleinimids der allgemeinen Formel I

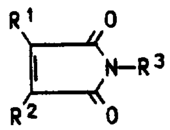

(I),

wobei $R^1$, $R^2$ und $R^3$ Wasserstoff, Alkyl-, Alkoxy-, Cycloalkyl-, Alkenyl-, Aryl-, Arylen- oder Alkylengruppen mit 1 - 12 C-Atomen sind, und/oder

$b_{33}$) eines Amid-Gruppen enthaltenden Monomeren mit einer polymerisierbaren Doppelbindung, und/oder

$b_{34}$) eines Lactam-Gruppen enthaltenden Monomeren mit einer polymerisierbaren Doppelbindung, und/oder

$b_{35}$) eines Halbesters oder Halbamids einer $\alpha,\beta$-ungesättigten Dicarbonsäure

$b_4$) 0 - 80 Gew.% weitere pfropfaktive Monomere und

$b_5$) 0 - 20 Gew.% eines Radikalstarters,

wobei sich die Mengenangaben $b_1$) bis $b_5$) auf den Gesamtgehalt der Komponente B) beziehen

C) 1 bis 20 Gew.% eines teilhydrierten PQP' -Blockcopolymeren, wobei

$\alpha$) die Blöcke P und P' aus vinylaromatischen Monomeren aufgebaut sind und der Gesamtanteil dieser Blöcke am Blockcopolymeren im Bereich von 25 bis 40 Gew.% liegt,

$\beta$) das Molekulargewicht (Zahlenmittelwert] des Blocks P weniger als 5000 beträgt und das Molekulargewicht (Zahlenmittelwert) des Blocks P' größer 8000 ist, sowie das Molekulargewicht (Zahlenmittel) des PQP' Blocks vor der Hydrierung 20 000 bis 250 000 beträgt (gemessen mit GPC)

$\gamma$) der Block Q aus konjugierten Dienmonomeren aufgebaut ist und insgesamt 60 bis 75 Gew.% des Blockcopolymeren ausmacht und

$\delta$) 5 bis 30 Gew.% der Doppelbindungen im Block Q nicht hydriert sind, und

D) 0 bis 50 Gew.% eines vinylaromatischen Polymeren,

wobei sich die Prozentzahlen A) bis D) zu 100 % ergänzen.

Außerdem betrifft die Erfindung die Verwendung derartiger Formmassen zur-Herstellung von Formkörpern und die daraus hergestellten Formkörper.

Polyphenylenether (PPE) sind Kunststoffe mit sehr guten thermischen, mechanischen und elektrischen Eigenschaften, weisen jedoch nur eine sehr geringe Lösungsmittelbeständigkeit auf. Dies gilt auch für ein im Handel befindliches Gemisch aus Polyphenylenether und Styrolpolymerisaten. Die Verwendbarkeit derartiger Produkte ist daher eingeschränkt.

Aus der US-A-3 379 792 ist bekannt, daß die Schmelzfließeigenschaften von Polyphenylenethern durch Zusatz von bis zu 25 Gew.% eines Polyamids verbessert werden. Ferner wird in dieser Patentschrift festgestellt, daß bei einem Polyamidzusatz von mehr als 20 Gew.% andere Eigenschaften des Polyphenylenethers erheblich verschlechtert werden.

Aus der GB-A 2 054 023 sind auch bereits Mischungen aus Polyphenylenethern und Polyamiden mit höheren Polyamid-Gehalten bekannt; zur Erzielung guter Eigenschaften ist es jedoch erforderlich, einen längeren Mischvorgang in der Schmelze vorzunehmen. Bei solch hoher thermischer Belastung über größere Zeiträume treten jedoch leicht Abbauerscheinungen ein.

In der EP-A 24 120 und EP-A 46 040 werden Mischungen aus Polyamiden, nicht modifizierten Polyphenylenethern und Copolymeren aus vinylaromatischen Monomeren und Maleinsäureanhydrid und/oder Maleinsäureimid beschrieben. Die in diesen Schriften beschriebenen Massen bzw. die daraus hergestellten Formkörper weisen eine unbefriedigende Schlagzähigkeit, insbesondere bei der Verwendung von Kautschuk als zusätzliche Komponente, und einen für viele Anwendungszwecke viel zu niedrigen Schmelzindex (MFI) auf.

Aus der EP-A 176 058 und EP-A 176 061 sind Mischungen aus Polyphenylenethern und hydrierten linearen Blockcopolymeren aus monalkenylaromatischen Monomeren und Dienen bekannt, wobei die Dieneinheiten zu mindestens 95 % hydriert sind. Die Langzeitstabilität dieser Produkte ist noch verbesserungsbedürftig.

In der niederländischen Patentanmeldung 73/2712 werden glasfaserverstärkte thermoplastische Formmassen aus Polyamiden, gegebenenfalls in Mischung mit Polyphenylenethern beschrieben, die thermoplastische Blockcopolymere des Typs $(B-S)_n$, $(S-B)_{n-1}$-S oder $(B-S)_n$-B enthalten, wobei B für ein konjugiertes Dien, S für ein vinylaromatisches Monomer und n für eine ganze Zahl im Bereich von 2 bis 5 steht.

In den US-A 4 085 163 und US-A 4 088 626 werden Mischungen aus zwei unterschiedlichen thermoplastischen Polymeren und Blockcopolymeren beschrieben, die mindestens zwei Endblöcke aus vinylaromatischen Monomeren und mindestens einen vollständig hydrierten Block aus konjugierten Dienen enthalten. Bei diesen Produkten ist die Schlagzähigkeit, insbesondere bei tiefen Temperaturen, nicht zufriedenstellend.

Aufgabe der vorliegenden Erfindung war es, thermoplastische Formmassen zur Verfügung zu stellen, die neben einer guten Verarbeitbarkeit gute thermische, mechanische und dielektrische Eigenschaften aufweisen. Insbesondere sollten sich die Formmassen durch eine hohe Schlagzähigkeit (auch mehraxial) und eine gute Lösungsmittelbeständigkeit auszeichnen.

Erfindungsgemäß wird diese Aufgabe durch die eingangs definierten thermoplastischen Formmassen gelöst.

Bevorzugte Massen dieser Art sind den Unteransprüchen zu entnehmen.

Als Komponente A enthalten die erfindungsgemäßen Formmassen 5 bis 94 Gew.% mindestens eines Polyamids. Geeignet sind lineare Polyamide z.B. mit einer relativen Viskosität von 2,2 bis 5,0, gemessen in 1 gew.-%iger Lösung in 96 gew.-%iger Schwefelsäure bei 23 °C. Bevorzugt seien genannt Polyamide, die sich von Lactamen mit 7 bis 13 Ringgliedern ableiten, wie Polycaprolactam, Polycapryllactam oder Polylaurinlactam sowie Polyamide, 1 die durch Umsatz von Dicarbonsäuren mit Diaminen erhalten werden. Geeignete Dicarbonsäuren sind beispielsweise Alkandicarbonsäuren mit 6 bis 12, insbesondere 6 bis 10 Kohlenstoffatomen sowie Terephthalsäure und Isophthalsäure sowie beliebige Mischungen dieser Säuren.

Als Diamine seien beispielsweise Alkandiamine mit 6 bis 12, insbesondere 6 bis 8 Kohlenstoffatomen, ferner m-Xylylendiamin, Bis(4-aminophenyl)-methan,Bis(4-aminocyclohexyl)methan oder Bis(4-aminophenyl)propan-2,2 oder deren Mischungen genannt.

Es ist auch möglich und manchmal vorteilhaft Mischungen der genannten Polyamide zu verwenden., Besondere technische Bedeutung haben Polyamid-6 (Polycaprolactam), Polyamid-66 (Polyhexamethylenadipinsäureamid) sowie Polyamide, die aus Hexamethylendiamin und Isophthalsäure sowie Terephthalsäure aufgebaut sind, erlangt.

Bevorzugte Formmassen enthalten 15 bis 80 Gew.-%, insbesondere 20 bis 70 Gew.-% an thermoplastischen Polyamiden.

Als Komponente B enthalten die erfindungsgemäßen Formmassen 5 bis 94, vorzugsweise 15 bis 80, insbesondere 20 bis 70 Gew.% mindestens eines weiter unten definierten, modifizierten Polyphenylenethers.

Bei der Komponente b1 handelt es sich um an sich bekannte Polyphenylenether, die beispielsweise durch oxidative Kupplung aus in o-Position disubstituierten Phenolen hergestellt werden können. Vorzugsweise werden solche Polyphenylenether eingesetzt, die mit vinylaromatischen Polymeren verträglich, d.h. ganz oder weitgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Die eingesetzten Polyphenylenether weisen im allgemeinen ein Molekulargewicht (Gewichtsmittelwert) im Bereich von 10.000 bis 80.000, vorzugsweise von 15.000 bis 60.000 auf.

Nur beispielsweise seien hier einige Polyphenylenether aufgeführt, wie sie u.a. in O. Olabisi, l.c., S. 224 bis 230 und 245 genannt werden, z.B. Poly(2,6-diethyl-1-phenylen)-oxid, Poly(2-methyl-6-ethyl-1,4-phenylen)-oxid, Poly(2-methyl-6-propyl-1,4-phenylen)oxid, Poly-(2,6-dipropyl-1,4-phenylen)oxid, Poly(2-ethyl-6-propyl-1,4-phenylen)oxid, bevorzugt Poly(2,6-dimethyl-1,4-phenylen)oxid oder Copolymere, wie solche, die 2,3,6-Trimethylphenol enthalten, außerdem Polymermischungen. Besonders bevorzugt ist jedoch Poly(2,6-dimethyl-1,4-phenylen)oxid.

Gemäß der Erfindung wird als Komponente B ein modifizierter Polyphenylenether eingesetzt, der durch Umsetzung aus den nachstehend näher beschriebenen Komponenten $b_1$) und $b_3$) und gegebenenfalls $b_2$), $b_4$) und $b_5$) hergestellt wird.

Bei der Komponente $b_1$) handelt es sich um Polyphenylenether wie sie vorstehend bereits beschrieben wurden. Der Anteil der Komponente $b_1$), bezogen auf die Summe der Komponenten $b_1$) bis $b_5$) beträgt 4,95 bis 99,95, vorzugsweise 10 bis 99,95 und insbesondere 50 bis 90 Gew.%.

Die Komponente $b_2$), die gegebenenfalls am Aufbau des modifizierten Polyphenylenethers beteiligt ist, ist ein vinylaromatisches Polymer, das vorzugsweise mit dem eingesetzten Polyphenylenether verträglich ist.

Das Molekulargewicht dieser Polymere liegt im allgemeinen im Bereich von 15000 bis 2.000.000, vorzugsweise im Bereich von 70,000 bis 1.000.000.

Beispiele für bevorzugte, mit Polyphenylenethern verträgliche vinylaromatische Polymere sind der bereits erwähnten Monographie von Olabisi, S. 224 bis 230 und S. 245 zu entnehmen. Nur stellvertretend seien hier vinylaromatische Polymere aus Styrol, Chlorstyrol, $\alpha$-Methylstyrol, p-Methylstyrol genannt: in untergeordneten Anteilen (vorzugsweise nicht mehr als 20, insbesondere nicht mehr als 8 Gew. %), können auch Comonomere wie (Meth)acrylnitril oder (Meth)acrylsäureester am Aufbau beteiligt sein. Ein besonders bevorzugtes vinylaromatisches Polymeres ist Polystyrol. Es versteht sich, daS auch Mischungen dieser Polymere eingesetzt werden können.

Verfahren zur Herstellung solcher vinylaromatischer Polymeren sind an sich bekannt und in der Literatur beschrieben, so daß sich hier nähere Angaben erübrigen.

Nur beispielsweise seien hier als geeignete Polymerisationsverfahren die Masse-, Suspensions-, Emulsions- oder Lösungspolymerisation erwähnt.

Der Anteil des vinylaromatischen Polymeren $b_2$) an der Komponente B) liegt im Bereich von 0 bis 90, vorzugsweise 0 bis 70 und insbesondere 0 bis 60 Gew.%.

Bei Verwendung von Fumarsäure ($b_{31}$) als Bestandteil $b_3$) hat es sich häufig als vorteilhaft erwiesen, wenn die Formmassen einen gewissen Mindestgehalt an vinylaromatischem Polymeren $b_2$), vorzugsweise mindestens 1,95 Gew.%, insbesondere mindestens 4,95 Gew.%, bezogen auf die Komponente B) enthalten.

Als wesentliche Komponente $b_3$) enthält der modifizierte Polyphenylenether B) mindestens eine der Verbindungen $b_{31}$) bis $b_{35}$)

Prinzipiell können auch Mischungen verschiedener Verbindungen $b_{31}$) bis $b_{35}$) eingesetzt wserden, doch ist im allgemeinen die Verwendung nur einer dieser Verbindungsarten vorteilhaft.

Bei der Komponente $b_{31}$) handelt es sich um Fumarsäure. Deren Anteil beträgt 0,05 bis 10 Gew.%, vorzugsweise 0,1 bis 5 Gew.%, bezogen auf die Summe der Komponenten $b_1$) bis $b_5$).

Die Komponenten $b_{32}$) sind Maleinimide der allgemeinen Formel I

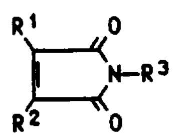

(I),

wobei $R^1$, $R^2$ und $R^3$ Wasserstoff, Alkyl-, Alkoxy-, Cycloalkyl-, Alkenyl-, Aryl-, Arylen- oder Alkylengruppen mit 1 bis 12 C-Atomen sind.

Vorzugsweise sind die Substituenten $R^1$, $R^2$ und $R^3$ Alkylgruppen mit 1 bis 4 C-Atomen, beispielsweise Methyl-, Ethyl- oder n-, i- oder t-Butyl, Cycloalkylgruppen mit bis zu 8 C-Atomen oder Phenylgruppen, die gegebenenfalls alkyl- oder alkoxysubstituiert sein können.

Nur beispielhaft seien als bevorzugte Maleinimide N-Methylmaleinimid, N-Butylmaleinimid, N-Cyclohexylmaleinimid, N-Phenylmaleinimid, N-(p-Methylpheny)maleinimid, N-(3,5-Dimethylphenyl)maleinimid, N-(p-Methoxyphenyl)maleinimid, N-Benzylmaleinimid, N-(1-Naphthyl)maleinimid oder deren Mischungen genannt. Von diesen wird N-Phenylmaleinimid besonders bevorzugt.

Der Anteil des Maleinimids der allgemeinen Formel I beträgt 0,05 bis 10, vorzugsweise 0,1 bis 5 Gew.%, bezogen auf die Summe der Komponenten $b_1$) bis $b_5$).

Ebenfalls geeignet als Komponente $b_3$) sind Amidgruppen enthaltende Monomere mit mindestens einer polymerisierbaren Doppelbindung, vorzugsweise solche der allgemeinen Formeln II oder III

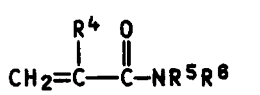

(II)

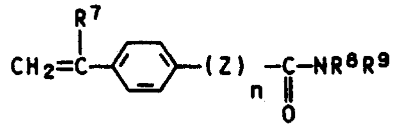

(III),

wobei $R^4$, $R^5$, $R^6$, $R^7$, $R^8$ und $R^9$ Wasserstoff, Alkyl- oder Alkoxygruppen mit 1 bis 12 C-Atomen, Cycloalkylgruppen mit bis zu 12 C-Atomen oder Arylgruppen und Z Alkenylgruppen mit 2 bis 12 C-Atomen darstellen und n den Wert 0 oder 1, vorzugsweise 0 hat.

Bevorzugte Substituenten $R^5$, $R^6$, $R^8$ und $R^9$ sind Alkylgruppen mit 1 bis 10 C-Atomen, Cycloalkylgruppen mit bis zu 8 C-Atomen oder Arylgruppen, vorzugsweise Phenyl. $R^4$ und $R^7$ sind bevorzugt H oder Methyl.

Beispielhaft seien hier Acrylamid, N-Methyl-, N-Ethyl-, N-Propyl-, N-Butyl-, N-Pentyl-, N-Hexyl-, N-Heptyl-, N-Octyl-, N-Nonyl-, N- (2-ethyl-hexyl)-acrylamid, N-Cyclohexylacrylamid, N-Phenylacrylamid, die entsprechenden N,N-Derivate wie N,N-Dimethylacrylamid und die entsprechenden Methacrylamide sowie deren Mischungen genannt.

Bevorzugt werden Acrylamid, Methacrylamid, N-Phenylacrylamid und N-Phenylmethacrylamid verwendet.

Der Anteil der Komponente $b_{33}$) beträgt 0,05 bis 10, vorzugsweise 0,1 bis 10, insbesondere 1 bis 5 Gew.%, bezogen auf die Summe der Komponenten $b_1$) bis $b_5$).

Als Komponente kann auch ein Lactam-Gruppen enthaltendes Monomer mit mindestens einer polymerisierbaren Doppelbindung ($b_{34}$) eingesetzt werden.

Vorzugsweise werden Lactame der allgemeinen Struktur IV

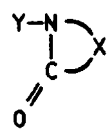 (IV)

eingesetzt, wobei X eine lineare verzweigte Alkylengruppe mit 2 bis 15 C-Atomen darstellt und Y die allgemeinen Formel

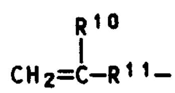

hat,
wobei $R^{10}$ ein Wasserstoffatom, eine Alkyl- oder Alkoxygruppe mit 1 bis 4 C-Atomen und $R^{11}$ einen zweibindigen Substituenten

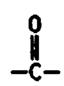

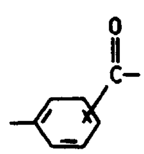

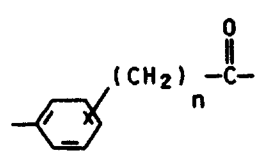 ,

wobei n eine ganze Zahl von 1 bis 4 ist, darstellen.

Bevorzugte Substituenten Y sind ganz allgemein Vinyl-, Acryloyl-, Methacryloyl- oder Reste mit Styrol-Grundstrukturen.

Besonders bevorzugt sind Lactameinheiten, die zu Polyamiden polymerisierbar oder copolymerisierbar sind, wie dies in Houben-Weyl, Methoden der organ. Chemie, Band x/2, S. 511 bis 587, (1958) und Band XIV/2, S. 111 bis 131, beschrieben wird.

Beispielsweise seien genannt:
β-Propiolactame (Azetidin-2-one), wie

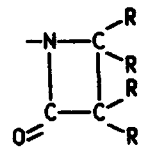

wobei R gleiche oder verschiedene Alkylgruppen mit 1 bis 6 C-Atomen oder Wasserstoff sind. Derartige Verbindungen sind beschrieben bei R. Graf, Angewandte Chemie, 74, 523 bis 530, (1962) und H. Bastian, Angewandte Chemie, 80, 304 bis 312, (1968).

Nur beispielhaft sei als ein Vertreter dieser Gruppe 3,3'-Dimethyl-3-propiolactam genannt.

Ebenfalls bevorzugte Lactam-Einheiten sind 2-Methylpyrrolidone

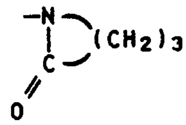

ε-Caprolactam, wie

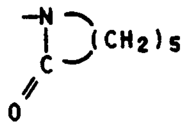

und außerdem 7-Önantholactam, 8-Capryllactam und 12-Laurinlactam wie sie bei K. Dachs, Angewandte Chemie, 74, 540 bis 545,(1962) beschrieben werden. Ganz besonders bevorzugt sind 2-Pyrrolidone und 6-Caprolactame.

Es können auch Mischungen dieser Verbindungen eingesetzt werden.

Vorzugsweise sind die Lactameinheiten über eine Carbonylgruppe am Stickstoff in den Polyphenylenether B eingebaut, wie dies nachstehend allgemein dargestellt ist.

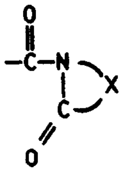

Als besonders bevorzugtes Beispiel einer Komponente $b_{34}$) sei hier nur N-(Meth)acryloyl-ε-caprolactam

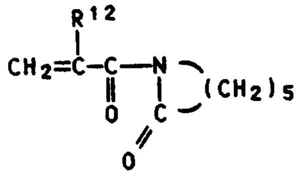

genannt,
wobei $R^{12}$ ein Wasserstoffatom oder eine Methylgruppe sein kann.

Der Anteil der Komponente $b_{34}$) beträgt 0,05 bis 10, vorzugsweise 0,1 bis 10 und insbesondere 0,5 bis 5 Gew.%, bezogen auf die Summe der Komponenten $b_1$) bis $b_5$).

Bei der Komponente $b_{35}$ handelt es sich um Halbester oder Halbamide von $\alpha,\beta$-ungesättigten Dicarbonsäuren. Als Beispiele für bevorzugte Dicarbonsäuren seien Maleinsäure, Fumarsäure, Chlormaleinsäure, Dichlormaleinsäure, Methylmaleinsäure, Butenylbernsteinsäure und Tetrahydrophthalsäure genannt, von denen Maleinsäure und Fumarsäure besonders bevorzugt werden.

Zur Herstellung der erfindungsgemäß eingesetzten Halbester oder Halbamide können diese Säuren oder deren Anhydride mit den entsprechenden Alkoholen bzw. Aminen umgesetzt werden. Entsprechende Verfahren sind an sich bekannt und in der Literatur beschrieben, so daß sich hier nähere Angaben erübrigen.

Als Alkohole zur Herstellung der Halbester werden bevorzugt primäre und sekundäre Monoalkohole, wie Methanol, Ethanol, n- und i-Propanol, n- und i-Butanol, Pentanole, Hexanole, Heptanole, Octanole, z.B. 2-Ethylhexyl-alkohol und höhere Alkohole wie Dodecanole und cycloaliphatische Alkohole, z.B. Cyclohexanol eingesetzt. Weiter eignen sich auch Alkohole mit aromatischen Struktureinheiten wie z.B. Benzylalkohol. Neben C, H und O können die Alkohole auch Heteroatome - in der Hauptkette oder als Substituenten - wie N, O, S und Si enthalten. Schließlich seien auch Alkohole mit Ketogruppen in der Kette oder mit Halogensubstituenten erwähnt. Bevorzugt werden jedoch Alkanole mit 1 bis 6 C-Atomen.

Als Amine zur Herstellung der erfindungsgemäß eingesetzten Halbamide seien ganz allgemein sekundäre Amine und N-Alkylaniline genannt. Beispiele hierfür sind H-Methyl- oder N-Ethylalkylamine oder N-Methylanilin. Wie die Alkohole können die Amine auch Heteroatome und funktionelle Gruppen enthalten.

Ganz allgemein werden Halbester den Halbamiden vorgezogen. Der Anteil von $b_{35}$) betragt 0,05 bis 10, vorzugsweise 0,1 bis 5 Gew.%, bezogen auf das Gesamtgewicht der Komponente B).

Formmassen, die die Komponente $b_{35}$) enthalten, weisen häufig besonders gute Fließeigenschaften, d.h. besonders hohe Schmelzindex-Werte (MFI) auf.

Gegebenenfalls können bei der Herstellung des modifizierten Polyphenylenethers B auch weitere Comonomere $b_4$) eingesetzt werden, die unter den Herstellungsbedingungen mit den Komponenten $b_1$) und gegebenenfalls $b_2$) reagieren bzw. auf diese aufpfropfen. Beispielsweise seien hier Acrylsäure, Methacrylsäure, Acrylate, Methacrylate und vinylaromatische Monomere wie Styrol, $\alpha$-Methylstyrol und Vinyltoluol genannt, um nur einige aufzuführen.

Der Anteil der Komponente $b_4$) betragt 0 bis 80, vorzugsweise 0 bis 45 und insbesondere nicht mehr als 20 Gew.%, bezogen auf die Summe der Komponenten $b_1$) bis $b_5$). Besonders bevorzugt werden Formmassen, die keine Komponente $b_4$) enthalten.

Als Komponente $b_5$) können bei der Herstellung der modifizierten Polyphenylenether B) bis zu 20 Gew.% an Radikalstartern eingesetzt werden.

Der Anteil der Komponente $b_5$) ist in der Regel geringer als die Summe der Anteile der Komponenten $b_3$) und $b_4$). Vorzugsweise handelt es sich dabei um ein organisches Peroxid oder eine Azo-Verbindung.

Besonders bevorzugt sind organische Peroxide mit einer Halbwertzeit im Bereich von 1 bis 30 sec. bei 200 °C. Die Wahl des Radikalstarters richtet sich nach der gewünschten Reaktionstemperatur.

Beispielsweise seien als Radikalstarter genannt:

Di-(2,4-dichlorbenzoyl)peroxid, tert.-Butylperoxid, Di-(3,5,5-trimethyl-hexanol)peroxid, Di-lauroylperoxid, Di-decanoylperoxid, Di-propionylperoxid, Di-benzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Ditert.-butylperoxybutan, Di-cumylperoxid, tert.-Butylcumylperoxid, 1,3-Di(tert.-butylperoxyisopropyl)benzol, Di-tert.-butylperoxid, Di-isopropylbenzolmonohydroperoxid, Cumolhydroperoxid, tert.-Butylhydroperoxid, 2,2-Azo-di(2,4-dimethylvaleronitril), Azo-bis-isobutyronitril, wobei Di-cumylperoxid besonders bevorzugt wird.

Häufig hat es sich als vorteilhaft erwiesen, ohne die Komponente $b_5$) zu arbeiten. Dies gilt insbesondere dann, wenn als Komponente $b_3$) Fumarsäure ($b_{31}$) eingesetzt wird, da hier bei der Verwendung von Radikalstartern unter Umständen unerwünschte Nebenreaktionen auftreten können.

Zur Herstellung des modifizierten Polyphenylenethers B können die Komponenten $b_1$) bis $b_5$) bei 250 bis 350 °C, vorzugsweise 265 bis 295 °C, miteinander umgesetzt werden. Hierzu eignen sich besonders Extruder, da in diesen im allgemeinen auch eine gute Durchmischung der Komponenten erzielt wird. Die Verweilzeiten liegen im allgemeinen im Bereich von 0,5 bis 30 min., vorzugsweise von 1 bis 3 min. Besonders gut für das erfindungsgemäße Verfahren eignen sich Zweischneckenextruder.

Nachstehend wird eine besonders bevorzugte Verfahrensvariante beschrieben.

Die Komponenten $b_1$) bis $b_5$) werden vorzugsweise gemeinsam eindosiert und in einem Aufschmelzteil aufgeschmolzen. Die Extruderschnecke im Aufschmelzteil enthält bevorzugt Knetelemente. An die Aufschmelzzone schließt sich die Reaktionszone an, die bevorzugt Knetelemente und zusätzlich Knetelemente mit nachgeschaltetem rückwärts forderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert und das Granulat wird zur Herstellung der erfindungsgemäßen Formmassen eingesetzt.

Prinzipiell ist die Herstellung des modifizierten Polyphenylenethers auch in jedem Reaktionsgefäß, welches eine Reaktion der Komponenten miteinander ermöglicht, durchführbar.

Als Komponente C) enthalten die erfindungsgemäßen thermoplastischen Formmassen 1 bis 20, vorzugsweise 5 bis 20 und insbesondere 7 bis 18 Gew.% eines teilhydrierten PQP'-Blockcopolymeren, wobei

$\alpha$) die Blöcke P und P' aus vinylaromatischen Monomeren aufgebaut sind und der Gesamtanteil dieser Blöcke am Blockcopolymeren im Bereich von 25 bis 40 Gew.% liegt,

$\beta$) das Molekulargewicht (Zahlenmittelwert) des Blocks P weniger als 5000 beträgt und das Molekulargewicht (Zachlenmittelwert) des Blocks P' größer 8000 ist, sowie das Molekulargewicht (Zahlenmittel) des PQP' Blocks vor der Hydrierung 20 000 bis 250 000 beträgt (gemessen mit GPC),

$\gamma$) der Block Q aus konjugierten Dienmonomeren aufgebaut ist und insgesamt 60 bis 75 Gew.% des Blockcopolymeren ausmacht und

$\delta$) 5 bis 30 Gew.% der Doppelbindungen im Block Q nicht hydriert sind.

In den Blockstrukturen der allgemeinen Formel P-Q-P' sind also die P- und P'-Blöcke nicht elastomer, wahrend die Q-Blöcke elastomer sind.

Ein wesentliches Merkmal der Blockcopolymerisate C) ist ihr unsymmetrischer Blockaufbau, d.h. die Tatsache, daß das Molekulargewicht des Blocks P weniger als 5000 beträgt und in jedem Fall kleiner als das Molekulargewicht des Blocks P' ist.

Als monovinylaromatische Kohlenwasserstoffe für die Blöcke P und P' kommen Styrol und substituierte Styrole, die am Kern oder an der Seitenkette alkyliert oder halogeniert sein können, in Betracht, Beispielsweise seien hier Styrol, o- und p-Methylstyrol, Ethylvinylbenzol, tert.-Butylstyrol, $\alpha$-Methylstyrol, p-Chlorstyrol und m-Chlorstyrol genannt. Es versteht sich, daß auch Mischungen mehrerer vinylaromatischer Verbindungen eingesetzt werden können.

Vorzugsweise werden Styrol, $\alpha$-Methylstyrol und p-Methylstyrol verwendet.

Der Gewichtsanteil der monovinylaromatischen Verbindungen beträgt 25 bis 40, insbesondere 30 bis 40 Gew.%, bezogen auf das Gesamtgewicht der eingesetzten Monomeren und entsprechend auch 25 bis 40 Gew.%, bezogen auf das Gesamtgewicht des Blockcopolymeren.

Als konjugierte Dienmonomere für den Aufbau der Blöcke Q kommen insbesondere 1,3-Butadien, 2,3-Dimethylbutadien sowie Isopren und 1,3-Pentadien in Betracht. Der Diengehalt, bezogen auf das Gesamtgewicht der bei der Herstellung der Komponente c) eingesetzten Monomeren und entsprechend auch am Blockcopolymer C) liegt im Bereich von 60 bis 75, vorzugsweise von 60 bis 70 Gew.%.

Die Blockcopolymerisate C) können beispielsweise durch Lösungspolymerisation hergestellt werden, die nachfolgend etwas eingehender beschrieben wird.

Als Lösungsmittel für die Polymerisation eignen sich insbesondere geradkettige und verzweigte aliphatische Kohlenwasserstoffe wie n-Pentan, n-Octan, n-Decan, Isopentan, Isooctan, 2,3-Dimethylbutan, sowie einfache oder substituierte cycloaliphatische und aromatische Kohlenwasserstoffe wie Cyclopentan, Cyclohexan, Methylcyclohexan, Decalin, Benzol, Toluol, Ethylbenzol, Cumol, Mesitylen, Tetralin sowie Mischungen der vorgenannten Lösungsmittel. Als besonders vorteilhaft hat sich in einigen Fällen Cyclohexan als Lösungsmittel herausgestellt.

Zur Erhöhung des Gehalts an 1,2-Vinyleinheiten im Blockcopolymeren C) können dem Lösungsmittel polare Reagentien zugesetzt werden. Deren Anteil beträgt im allgemeinen 0,01 bis 2 Gew.%, bezogen auf das Gesamtgewicht des Lösungsmittels. Als Beispiele seien Ether wie Tetrahydrofuran und Diethylether sowie Tetramethylethylendiamin genannt, von denen Tetrahydrofuran besonders bevorzugt wird.

Die Monomerkonzentration im Lösungsmittel liegt vorteilhaft zwischen 20 und 30 Gew.%.

Das Molekulargewicht der nach der Polymerisation erhaltenen Copolymerisate C vor der Hydrierung liegt im Bereich von 20000 bis 250000. Das Molekulargewicht wird mit Hilfe der Gelpermeationschromatographie bestimmt und als Zahlenmittel $\overline{M}_n$ angegeben.

Zur Herstellung von Blockcopolymeren in diesem Molekulargewichtsbereich können als Katalysatoren vorzugsweise Lithiumalkyl-Katalysatoren in Mengen von 0,5 bis 10 Mol pro 100 kg Monomere eingesetzt werden. Als Beispiele für Lithiumalkyle seien insbesondere Methyllithium, Ethyllithium, n- und sek.-Butyllithium und Isopropyllithium genannt, von denen n- und sek.-Butyllithium besonders bevorzugt werden.

Die Hydrierung der Blöcke Q in den Blockcopolymeren C) erfolgt nach an sich bekannten Verfahren, wobei darauf zu achten ist, daß überwiegend die von den Dienen herrührenden Doppelbindungen hydriert werden, und die Hydrierung der aromatischen Systeme weitgehend vermieden wird. Auch ist darauf zu

achten, daß keine vollständige Hydrierung stattfindet, sondern mindestens 5 bis 30, vorzugsweise 7 bis 25 Gew.% der Doppelbindungen im Block Q erhalten bleiben.

Die Hydrierung kann beispielsweise durch Umsetzen der Blockcopolymerisate mit Wasserstoff bei Drucken zwischen 5 und 30 bar, insbesondere zwischen 10 und 20 bar und bei Temperaturen im Bereich von 50 bis 200 °C erfolgen. Als Katalysatoren für diese Hydrierung seien nur beispielsweise homogene Nickel/Aluminium-Katalysatorsysteme, hergestellt aus Nickel(II)octoat bzw.-Acetylacetonat, Bis(2,4-pentadienato)nickel und Aluminiumtriethyl bzw. Aluminiumtriisobutyl genannt. Diese Katalysatoren werden im allgemeinen in Mengen von 0,3 bis 7,0 mMol/kg des hydrierenden Polymeren eingesetzt, wobei sich die Molangabe auf den Gehalt an Nickel bezieht.

Die Aufarbeitung der Blockcopolymerisate C) kann durch Entfernung des Lösungsmittels, durch Dampfstrippen oder mittels Extruderentgasung erfolgen.

Als weiteren Bestandteil D) können die erfindungsgemäßen Formmassen gegebenenfalls in einer Menge bis zu 50, vorzugsweise bis zu 30, insbesondere 3 bis 20 Gew.%, vinylaromatische Polymere enthalten (bezogen auf die Summe der Komponenten A) bis D)). Geeignet sind bevorzugt mit Polyphenylenethern verträgliche Polymere, wie sie bereits als Komponente $b_2$) beschrieben wurden. Für nähere Einzelheiten sei deshalb auf die Ausführungen zur Komponente $b_2$) verwiesen.

Die Komponente D) kann auch schlagzäh modifiziert sein. Solche Polymere sind dem Fachmann als schlagzähes Polystyrol (HIPS) bekannt. Dabei werden die vinylaromatischen Polymeren in Gegenwart eines Schlagzähmodifiers hergestellt oder die vinylaromatischen Polymeren mit gepfropften Kautschuken abgemischt. Als kautschukartige Polymere seien beispielsweise Polybutadien-, Styrol/Butadien-, Styrol-b-butadien, Acrylnitril/Butadien, Ethylen/Propylen-, Polyacrylat- und Polyisopren-Kautschuke genannt.

Neben den in der Komponente D) gegebenenfalls vorhandenen, gepfropften Kautschuken, wie Polybutadien-, Acrylat-, Styrol/Butadien-, PolybutenKautschuken, hydrierten Styrol/Butadien-, Acrylnitril/Butadien-, Ethylen/ Propylen- und Polyisopren-Kautschuken können diese auch ungepfropft zugesetzt werden. Als Kautschuke E) seien weiter erwähnt styrolgepfropfte Ethylen/Propylen-Kautschuke, thermoplastische Ethylen-PropylenKautschuke, thermoplastische Polyester-Elastomere, Ethylenkautschuke und Ionomere.

Diese Kautschuke können in Mengen bis 40, vorzugsweise bis zu 30 Gew.%, bezogen auf die Summe der Komponenten A) bis D), in den erfindungsgemäßen Formmassen vorhanden sein.

Neben den Komponenten A) bis D) können die erfindungsgemäßen thermoplastischen Formmassen auch übliche Zusatzstoffe und Verarbeitungshilfsmittel enthalten, Der Anteil dieser Zusätze betragt im allgemeinen nicht mehr als 40, insbesondere nicht mehr als 20 Gew.%, bezogen auf das Gesamtgewicht der Komponenten A) bis D).

Als Zusatzstoffe seien genannt Hitze- und Lichtstabilisatoren, Gleit- und Efltformungsmittel, Färbemittel, wie Farbstoffe und Pigmente in üblichen Mengen. Weitere Zusatzstoffe sind Verstärkungsmittel wie Glasfasern, Asbestfasern. Kohlenstoff-Fasern, aromatische Polyamidfasern und/oder Füllstoffe, Gipsfasern, synthetische Calciumsilikate, Kaolin, calciniertes Kaolin, Wollastonit, Talkum, Kreide, ferner Flammschutzmittel wie Phosphorverbindungen z.B. Phosphate, Phosphorsäureester, Phosphorigsäureester, Phosphinsäureester, Phosphonigsäureester oder organische Phosphinoxide.

Auch niedermolekulare oder hochmolekulare Polymere kommen als Zusatzstoffe in Betracht.

Die erfindungsgemäßen thermoplastischen Formmassen erhält man zweckmäßig durch Mischen der Einzelkomponenten bei Temperaturen von 250 bis 320 °C in üblichen Mischvorrichtungen, wie Knetern, Banbury-Mischern und Einschneckenextruder, vorzugsweise jedoch mit einem Zweischneckenextruder. Um eine möglichst homogene Formmasse zu erhalten, ist eine intensive Durchmischung notwendig. Die Abmischreihenfolge der Komponenten kann variiert werden, so können zwei oder gegebenenfalls drei Komponenten vorgemischt werden, es können aber auch alle Komponenten gemeinsam gemischt werden.

Es sei erwähnt, daß bei der Herstellung der Formmassen manchmal eine Reaktion zwischen den Komponenten A) bis D) auftreten kann, so daß im Endprodukt keine reine Mischung dieser Komponenten mehr vorliegt.

Die erfindungsgemäßen Formmassen zeichnen sich durch ihre ausgewogenen Eigenschaften, insbesondere aber durch ihre gute Schlagzähigkeit in der Kälte (auch mehraxial) und ihre Lösungsmittelbeständigkeit aus.

Sie eignen sich besonders zur Herstellung von Formkörpern durch Spritzguß oder Extrusion.

Beispiele 1 bis 20

Komponente A

A/1 Polycaprolactam mit einer relativen Viskosität von 3,91, gemessen in 1 gew.%iger Lösung in m-Kresol bei 25 °C in einem Ubbelohde-Viskosimeter
A/2 Polyhexamethylenadipinsäureamid mit einer relativen Viskosität von 2,6, gemessen wie bei A/1.

Komponente B

B/1 83,7 Gew.% Poly-(2,6-dimethyl-1,4-phenylenether(PPE) mit einer relativen Viskosität von 0,63 (gemessen in 1 gew.%iger Lösung in $CHCl_3$ bei 25 °C), 15 Gew.% Polystyrol (PS 144 C, Schmelzflußindex MFI bei 200 °C/5 kg Belastung = 24 g/10 min) und 1,3 Gew.% Fumarsäure wurden in einen Zweischneckenextruder (ZSK 53; Werner & Pfleiderer) dosiert, in einem ersten Teil unter Verwendung von Knetelementen bei 255 °C aufgeschmolzen, in einem zweiten Teil unter Kneten und Verwendung von Knetelementen bei 285 °C umgesetzt und anschließend in einer Entgasungszone bei 255 °C durch Anlegen von Vakuum entgast. Die mittlere Verweilzeit im Extruder betrug 2,5 min, Die austretende Schmelze wurde durch ein Wasserbad geleitet, granuliert und getrocknet, Das Granulat hatte einen Fumarsäuregehalt von 0,7 Gew.% und eine hellgelbe Farbe.
B/2 80,5 Gew.% PPE, 17 Gew.% Polystyrol (beide wie bei B/1) und 2,5 Gew.% Fumarsäuremonoethylester wurden wie bei der Herstellung von B/1 umgesetzt.

Komponente C

C/1 In einem Rührkessel wurden unter Stickstoffatmosphäre 700 g gereinigtes, wasserfreies Cyclohexan, 0,25 g Tetrahydrofuran und 18 g Styrol vorgelegt. Nach dem Austitrieren der protonenaktiven Verunreinigungen mit einer Lösung von sek.-Butyllithium wurde die berechnete Menge Initiator (4,5 mmol sek,-Butyllithium) zugesetzt und bei 60 °C bis zur vollständigen Umsetzung polymerisiert.

Anschließend wurden in den Rührkessel 195 g 1,3-Butadien eingespeist und wiederum bis zur vollständigen Umsetzung polymerisiert, wobei ein Zweiblockpolymer der Struktur P-Q erhalten wurde.

In einem dritten Schritt wurden weitere 90 g Styrol zugegeben und erneut vollständig umgesetzt, wobei ein P-Q-P' -Blockcopolymerisat erhalten wurde.

Die reaktiven Endgruppen des Blockcopolymerisats wurden durch Umsetzung mit Isopropanol abgesättigt.

Die selektive Hydrierung erfolgte durch Zugabe einer Katalysatorlösung aus 1,3 g Nickel(II)-acetylacetönat gelöst in 80 ml Toluol und versetzt mit 30 ml Aluminiumtriisobutyl (20 %ig in Hexan) und bei einem Wasserstoffdruck von 15 bar und 80 °C Hydriertemperatur.

Nach Erreichung eines gewünschten Hydriergrades, welcher durch FT-IR-Spektroskopie an entnommenen Proben bestimmt wurde, erfolgte die Aufarbeitung der Copolymerisate durch Entfernen des Lösungsmittels über Extruderentgasung.
C/2 Es wurde wie bei C/1 beschrieben gearbeitet, jedoch die kleinere Styrolmenge zur Bildung des P-Blocks in der dritten Stufe zugegeben.

Im einzelnen wurden folgende Anteile der Komponenten eingesetzt:

| | |
|---|---|
| Cyclohexan | 700 g |
| Tetrahydrofuran | 0,2 g |
| Styrol (P'-Block) | 90 g |
| 1,3-Butadien(Q-Block) | 195 g |
| Styrol (P-Block) | 15 g |

Die linearen P-Q-P'-Blockcopolymerisate C) wurden folgendermaßen charakterisiert:
Glasübergangstemperatur: bestimmt nach K.H. Illers und H. Breuer, Kolloidzeitschrift, 190(1), 16-34 (1963).

Molekulargewicht: Die mittleren Molekulargewichte (Zahlenmittel $\overline{M}_n$) wurden durch Gelpermeationschromatographie anhand von Eichkurven für Polystyrol bzw. Polybutadien (Eichsubstanzen; $\overline{M}_w/\overline{M}_n$ ca. 1) bei 23 °C in 0,125 gew.%iger Tetrahydrofuranlösung bei einer Durchflußgeschwindigkeit von 1,5 ml/min ermittelt. Bei Blockcopolymeren wurde das arithmetische Gewichtsmittel zwischen den beiden Eichkurven zugrundegelegt [vgl. G. Glöckner, "Polymercharakterisierung durch Flüssigkeitschromatographie", Verlag A.

Hüthig, Heidelberg, 1982].

Die Charakterisierung des Blockaufbaus erfolgte durch oxidativen Abbau der unhydrierten Blockcopolymerisate mit Osmiumtetroxid.

Der Rest-Doppelbindungsgehalt der olefinisch ungesättigten Bindungen im Block Q wurde durch Fourier-Transform-IR-Analyse bestimmt.

Zum Vergleich wurde in den Beispielen 3, 6 und 9 ein Styrol-Butadien-Styrol-Dreiblockcopolymer mit symmetrischem Aufbau, einem Styrolgehalt von 30 Gew.% und einem Gewichtsmittel des Molekulargewichts von 50.000 eingesetzt (Komponente C/V, dessen Restdoppelbindungsgehalt in Block Q unter 3 Gew.% lag.

Komponente D

Hochschlagzähes Polystyrol (HIPS) mit einem Gehalt von 8 Gew.% Butadien und einem Schmelzindex (200 °C/5,0 kg) von 15 g/10 min (Buna CB NX 529C, anionisch hergestellt).

Zur Herstellung der Formmassen wurden die Komponenten A) bis D) bei 305 °C in einem Zweischnekken-Extruder gemischt, extrudiert und anschließend granuliert. Zur Bestimmung der Kerbschlagzähigkeit nach DIN 53 453 wurden auf einer Spritzgußmaschine Prüfkörper hergestellt.

In Tabelle 1 sind die charakterisierenden Angaben zu den eingesetzten Blockcopolymeren enthalten, während in Tabelle 2 die Zusammensetzung der Formmassen und die Ergebnisse der Kerbschlagzähigkeitsmessungen aufgeführt sind.

Tabelle 1: Charakterisierung der Blockcopolymeren

| | $\bar{M}$ 1) | $\bar{M}_P$ 2) | $\bar{M}_{P'}$ 3) | Glasübergangstemperatur °C | Doppelbindungsgehalt (%) |
|---|---|---|---|---|---|
| C/1 | 67.000 | 4.000 | 20.000 | - 61 | 14 |
| C/2 | 71.000 | 3.700 | 21.000 | - 58 | 11 |
| C/V | 50.000 | 11.000 | 12.000 | - 56 | < 3 |

1) Molekulargewicht des Blockcopolymeren P-Y-P'
2) Molekulargewicht des Blocks P
3) Molekulargewicht des Blocks P'

Tabelle 2

| (alle Mengenangaben in Gew.%) | | | | | | | |
|---|---|---|---|---|---|---|---|
| Bsp. Nr. | **Komponente** | | | | Kerbschlagzähigkeit [kJ/m$^2$] | | |
| | A | B | C | D | 23 °C | -20 °C | -40 °C |
| 1 | 52,2 A/1 | 34,8 B/1 | 8,7 C/2 | 4,3 | 22 | 12 | 8 |
| 2 | 47,8 A/1 | 39,1 B/1 | 10,4 C/2 | 2,7 | 26 | 13 | 10 |
| 3* | 47,8 A/1 | 39,1 B/1 | 10,4 C/V | 2,7 | 17 | 5 | 3 |
| 4 | 47,3 A/2 | 43,6 B/2 | 9,1 C/1 | - | 21 | 10 | 8 |
| 5 | 46,4 A/1 | 42,8 B/2 | 10,8 C/2 | - | 19 | 12 | 10 |
| 6* | 46,4 A/1 | 42,8 B/2 | 10,8 C/V | - | 13 | 4 | 4 |
| 7 | 50,4 A/2 | 27,1 B/1 | 10,8 C/1 | 11,7 | 18 | 11 | 8 |
| 8 | 45,0 A/2 | 45,0 B/1 | 7,2 C/2 | 2,8 | 18 | 10 | 7 |
| 9* | 45,0 A/2 | 45,0 B/1 | 7,2 C/V | 2,8 | 12 | 4 | 3 |

* Vergleichsbeispiele

## Patentansprüche

**1.** Thermoplastische Formmassen, enthaltend als wesentliche Komponenten

A) 5 bis 94 Gew.% eines Polyamids

B) 5 bis 94 Gew.% eines modifizierten Polyphenylenethers hergestellt aus

$b_1$) 4,95 - 99,95 Gew.% eines Polyphenylenethers,

$b_2$) 0 - 90 Gew.% eines vinylaromatischen Polymeren,

$b_3$) 0,05 - 10 Gew.%

$b_{31}$) Fumarsäure und/oder

$b_{32}$) eines Maleinimids der allgemeinen Formel I

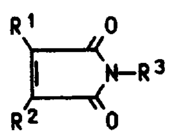

(I),

wobei $R^1$, $R^2$ und $R^3$ Wasserstoff, Alkyl-, Alkoxy-, Cycloalkyl-, Alkenyl-, Aryl-, Arylen- oder Alkylengruppen mit 1 - 12 C-Atomen sind, und/oder

$b_{33}$) eines Amid-Gruppen enthaltenden Monomeren mit einer polymerisierbaren Doppelbindung, und/oder

$b_{34}$) eines Lactam-Gruppen enthaltenden Monomeren mit einer polymerisierbaren Doppelbindung, und/oder

$b_{35}$) eines Halbesters oder Halbamids einer $\alpha,\beta$-ungesättigten Dicarbonsäure

$b_4$) 0 - 80 Gew.% weitere pfropfaktive Monomere und

$b_5$) 0 - 20 Gew.% eines Radikalstarters,

wobei sich die Mengenangaben $b_1$) bis $b_5$) auf den Gesamtgehalt der Komponente B) beziehen.

C) 1 bis 20 Gew.% eines teilhydrierten PQP' -Blockcopolymeren, wobei

$\alpha$) die Blöcke P und P' aus vinylaromatischen Monomeren aufgebaut sind und der Gesamtanteil dieser Blöcke am Blockcopolymeren im Bereich von 25 bis 40 Gew.% liegt,

$\beta$) das Molekulargewicht (Zahlermittelwert) des Blocks P weniger als 5000 beträgt und das Molekulargewicht (Zahlermittelwert des Blocks P' größer 8000 ist, sowie das Molekulargewicht (Zahlenmittel) das PQP Blocks vor der Hydrierung 20 000 bis 250 000 beträgt (gemessen mit GPC),

$\gamma$) der Block Q aus konjugierten Dienmonomeren aufgebaut ist und insgesamt 60 bis 75 Gew.% des Blockcopolymeren ausmacht und

$\delta$) 5 bis 30 Gew.% der Doppelbindungen im Block Q nicht hydriert sind,

sowie darüberhinaus

D) 0 bis 50 Gew.% eines vinylaromatischen Polymeren,
wobei sich die Prozentzahlen A) bis D) zu 100 % ergänzen.

2. Thermoplastische Formmassen nach Anspruch 1, gekennzeichnet durch folgende Gehalte
   A) 15 bis 80 Gew.% Polyamid
   B) 15 bis 80 Gew.% Polyphenylenether
   C) 5 bis 20 Gew.% teilhydriertes PQP' -Blockcopolymer
   D) 0 bis 20 Gew.% vinylaromatisches Polymer.

3. Verwendung der thermoplastischen Formmassen gemäß den Ansprüchen 1 und 2 zur Herstellung von Formkörpern.

4. Formkörper, erhältlich aus thermoplastischen Formmassen gemäß den Ansprüchen 1 und 2 als wesentlichen Komponenten.

**Claims**

1. A thermoplastic molding material containing, as essential components,
   A) from 5 to 94% by weight of a polyamide,
   B) from 5 to 94% by weight of a modified polyphenylene ether prepared from
      $b_1$) 4.95-99.95% by weight of a polyphenylene ether,
      $b_2$) 0-90% by weight of a vinyl aromatic polymer,
      $b_3$) 0.05-10% by weight of
         $b_{31}$) fumaric acid and/or
         $b_{32}$) a maleimide of the general formula I

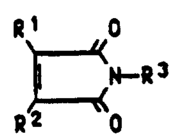

(I),

where $R^1$, $R^2$ and $R^3$ are each hydrogen or an alkyl, alkoxy, cycloalkyl, alkenyl, aryl, arylene or alkylene group of 1 to 12 carbon atoms, and/or
         $b_{33}$) an amido-containing monomer having a polymerized double bond and/or
         $b_{34}$) a lactam-containing monomer having a polymerizable double bond and/or
         $b_{35}$) a half-ester or half-amide of an $\alpha,\beta$-unsaturated dicarboxylic acid,
      $b_4$) 0-80% by weight of further graft-linking monomers and
      $b_5$) 0-20% by weight of a free radical initiator, the stated amounts $b_1$) to $b_5$) being based on the total content of the component B),
   C) from 1 to 20% by weight of a partially hydrogenated PQP' block copolymer,
      $\alpha$) the blocks P and P' being composed of vinyl-aromatic monomers and the total block copolymer content of these blocks being from 25 to 40% by weight,
      $\beta$) the number average molecular weight of block P being less than 5,000 and the number average molecular weight of block P' being greater than 8,000, and the number average molecular weight of the PQP' block prior to the hydrogenation being from 20,000 to 250,000 (measured by GPC),
      $\gamma$) block Q being composed of conjugated diene monomers and accounting for in total from 60 to 75% by weight of the block copolymer
   and
      $\delta$) from 5 to 30% by weight of the double bonds in block Q being non hydrogenated,
   and in addition
   D) from 0 to 50% by weight of a vinylaromatic polymer,
   the percentages A) to D) summing to 100%.

2. A thermoplastic molding material as claimed in claim 1, which comprises the following contents
   A) from 15 to 80% by weight of polyamide
   B) from 15 to 80% by weight of polyphenylene ether

C) from 5 to 20% by weight of partially hydrogenated PQP' block copolymer
D) from 0 to 20% by weight of vinylaromatic polymer.

**3.** Use of a thermoplastic molding material as claimed in claims 1 and 2 for the production of moldings.

**4.** A molding obtainable from a thermoplastic molding material as claimed in claims 1 and 2 as essential components.

**Revendications**

**1.** Masses à mouler thermoplastiques, contenant comme composants essentiels
A) 5 à 94% en poids d'un polyamide
B) 5 à 94% en poids d'un éther polyphénylénique modifié préparé à partir de
$b_1$) 4,95 à 99,95% en poids d'un éther polyphénylénique,
$b_2$) 0 à 90% en poids d'un polymère vinylaromatique,
$b_3$) 0,05 à 10% en poids.
$b_{31}$) d'acide fumarique et/ou
$b_{32}$) d'un maléimide de formule générale I

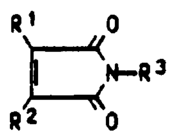 (I),

dans laquelle $R^1$, $R^2$ et $R^3$ représentent un atome d'hydrogène, des groupes alkyle, alcoxy, cycloalkyle, alcényle, aryle, arylène, ou alkylène à 1 & 12 atomes de carbone, et/ou
$b_{33}$) d'un monomère contenant un groupe amide ayant une double liaison polymérisable, et/ou
$b_{34}$) d'un monomère contenant un groupe lactame ayant une double liaison polymérisable, et/ou
$b_{35}$) d'un semi-ester ou d'un semi-amide d'un di-acide carboxylique $\alpha,\beta$-insaturé
$b_4$) 0 à 80% en poids d'autres monomères à activité de greffage et
$b_5$) 0 à 20% en poids d'un amorceur radicalaire,
les quantités $b_1$) à $b_5$) étant exprimées par rapport à la quantité totale de composant B),
C) 1 à 20% en poids d'un copolymère séquencé PQP' partiellement hydrogéné, dans lequel
$\alpha$) les séquences P et P' sont constituées de monomères vinylaromatiques et la fraction totale de ces séquences dans le copolymère séquencé est comprise entre 25 et 40% en poids,
$\beta$) le poids moléculaire (moyen en nombre) de la séquence P est inférieur à 5000 et le poids moléculaire (moyen en nombre) de la séquence P' est supérieur à 8000, de même que le poids moléculaire (moyen en nombre) de la séquence PQP' est compris, avant l'hydrogénation, entre 20 000 et 250 000 (mesuré par CPG),
$\gamma$) la séquence Q est constituée de monomères de diène conjugué et constitue dans sa totalité 60 à 75% en poids du copolymère séquencé et
$\delta$) 5 à 30% en poids des doubles liaisons dans la séquence Q ne sont pas hydrogénés,
ainsi que, de plus,
D) 0 à 50% en poids d'un polymère vinylaromatique, la somme des pourcentages de A) a D) s'élevant à 100%.

**2.** Masses à mouler thermoplastiques selon la revendication 1, caractérisées par les teneurs suivantes
A) 15 à 80% en poids de polyamide
B) 15 à 80% en poids d'éther polyphénylénique
C) 5 à 20% en poids de copolymère séquencé PQP' partiellement hydrogené
D) 0 à 20% en poids de polymère vinylaromatique.

**3.** Utilisation des masses à mouler thermoplastiques selon les revendications 1 et 2 pour la fabrication de pièces moulées.

4. Pièce moulée, obtenue à partir de masses à mouler thermoplastiques selon les revendications 1 et 2 comme composants essentiels.